Europäisches Patentamt

European Patent Office

Office européen des brevets

(11) Publication number: **0 267 372 B1**

# EUROPEAN PATENT SPECIFICATION

(45) Date of publication of patent specification: **20.05.92**  (51) Int. Cl.⁵: **B63B  1/08**

(21) Application number: **87110990.6**

(22) Date of filing: **29.07.87**

(54) **Shape of the stern of a vessel.**

(30) Priority: **06.08.86 JP 183474/86**

(43) Date of publication of application:
**18.05.88 Bulletin  88/20**

(45) Publication of the grant of the patent:
**20.05.92 Bulletin  92/21**

(84) Designated Contracting States:
**DE GB NL**

(56) References cited:
**GB-A- 288 689**
**GB-A- 520 984**
**GB-A- 1 129 584**
**GB-A- 1 362 125**

(73) Proprietor: **NIPPON KOKAN KABUSHIKI KAISHA**
**1-2 Marunouchi 1-chome Chiyoda-ku Tokyo 100(JP)**

(72) Inventor: **Matsumoto, Norihiro c/o Patent & Licence and**
**Ouality Standards Department NIPPON KOKAN K.K.**
**1-2, 1-chome Marunouchi Chiyoda-ku Tokyo(JP)**

(74) Representative: **Lehn, Werner, Dipl.-Ing. et al Hoffmann, Eitle & Partner Patentanwälte Arabellastrasse 4**
**W-8000 München 81(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a vessel, and more particularly to a structure of a stern part of a vessel according to the preamble of claim 1.

It is well known that a conventional single screw vessel is equipped with a propeller shaft on the hull longitudinal median plane, regardless of being symmetrical about the median plane or not. Water-flows, generated under the stern part of such a symmetry type vessel, flow into propeller blades, downwards from above and inwards from outside, symmetrically with regards to the propeller shaft of the vessel, to form vertical vortices around longitudinal axes. Water-inflows to the propeller blades, in the case of an asymmetry type vessel, form asymmetrical flows. In this manner, complicated distribution of wakes is generated during her sailing.

Large vessels with high block coefficiency and wide breadth have been increasing in number in order to improve loading capacity. Because of the high blockage coefficiency and the wide breadth, vertical vortices around longitudinal axes generated on a propeller disc plane from the aforementioned wakes, have increased the more. Those vertical vortices are generated in pair by both vessel sides, causing the wakes to be unbalanced on the propeller disc plane. This results not only in reducing propulsive efficiency but also in increasing hull resistance.

In these circumstances, there have been demanded improvement in loading capacity and, at the same time, in reducing fuel consumption ratio for sailing. To satisfy the both demands, improvement in propulsive efficiency has become an indispensable requirement. Occurrence of vertical vortices, which causes reduction of the propulsive efficiency of a vessel, has been unavoidable to a vessel having a large capacity of loadage. To overcome this problem, arrangements of water-inflow directions to propeller blades have been taken, depending on a type of a vessel.

Japanese patent examined publication (KOKOKU) No. 37315/72, for example, describes a method wherein:

(1) A propeller shaft of a vessel is positioned on the hull longitudinal median plane, and the stern end edge of the vessel is positioned, by far, eccentrically from the hull median plane;

(2) The distance between the median plane and the line passing through the stern end edge is larger than the radius of the propeller disc plane which propeller blades form by rotation and the propeller disc plane is positioned, on one side of the vessel, completely off the hull median plane; and

(3) The generated vortices flow to the reverse direction of the propeller blade rotation.

This method, however, has the following drawbacks:

(a) The distance between the line passing through the stern end edge and the hull median plane is required to be longer than the radius of the propeller disc plane, and, consequently, the distance from the hull median plane to the stern end edge is forced to be large. This results not only in raising ship-building cost but also in affecting unfavorably steering ability of a vessel.

(b) Shape of one side of the stern part becomes extremely slender in space. Resultantly, installation of engine machinery is tightly restricted, and transportation efficiency is badly affected.

A vessel according to the features of the preamble of the claim 1 is known from GB-A-1 362 125. The hull shape of this vessel is complicated and the ship-building costs are high also in view of the fact that in this well known vessel the stern has two axes of symmetry in the hull cross-section, namely one above the axis of the propeller and one below the axis of the propeller. Both axes are positioned offset the longitudinal median plane by at least 7,5 % of the propeller diameter.

In accordance with the present invention, a vessel equipped with a single screw is provided, which comprises:

a propeller shaft being positioned on the hull longitudinal median plane;

an upper deck being symmetrical with regard to the hull longitudinal median plane;

a stern having a frist axis of symmetry in hull cross-section above the axis of the propeller and a second axis of symmetry in hull cross-section below the axis of the propeller, the two axes of symmetry being positioned eccentrically from the longitudinal median plane,

the two axes of symmetry are positioned eccentrically from the hull longitudinal plane by at least 5 % of a diameter of a propeller disc plane,

the axis of symmetry above the axis of the propeller and the axis of symmetry below the axis of the propeller are situated on the same line and form thus one single axis of symmetry;

the single axis of symmetry is positioned eccentrically from the hull longitudinal median plane by 5 to 25 % of a diameter of a propeller disc plane.

Other objects and advantages of the present invention will become apparent from the detailed description to follow taken in conjunction with the appended drawings.

Fig. 1 is a body plan showing an embodiment of an afterbody of a vessel according to the present invention;

Fig. 2 is a graphic vector diagram showing waterinflows on a propeller disc plane according to the present invention;

Fig. 3 is a graphic representation showing relationship between water-inflows to propeller blades and rotation direction of the propeller according to the present invention;

Fig. 4 is a plane view showing a general construction of an embodiment of the present invention;

Fig. 5 is a sectional view along line X-X of Fig. 4; and

Fig. 6 is a graphic representation showing relation of a distance between the propeller shaft and the end edge of the stern positioned eccentrically from the hull center line, to relative propulsive power ratio against a prior art vessel.

With reference specifically to the drawings, an embodiment according to the present invention will now be described.

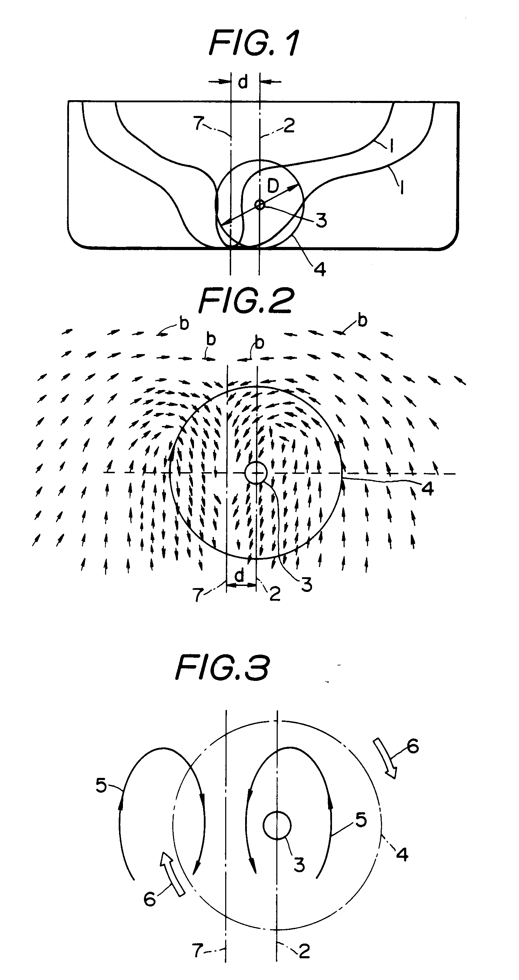

Fig. 1 represents a body plan viewed from the backward side. Reference numeral 1 denotes transverse sectional shapes of hull frames of the afterbody. Propeller shaft 3 is positioned on hull center line 2. Propeller blades are rotated clockwise on an axis of propeller shaft 3 to form propeller disc plane 4 having diameter "D". The end edge of the stern is positioned eccentrically from the hull center line, i.e. axis 7 of symmetry in hull section of the stern part of the afterbody is positioned, by distance "d", eccentrically from the hull center line.

Secondly, the work of the aforementioned positioning will be now explained, with particular reference to Fig. 2 of the drawing. Fig. 2 graphically represents a vector diagram illustrating transverse velocity of water-inflows to propeller disc plane 4, being viewed from the backward side. Vector (b) of the water-inflows forms circulating flows which are symmetrical with regard to axis 7. On the other hand, propeller shaft 3, positioned on hull center line 2, forms propeller disc plane 4 rotating clockwise, on an axis of the hull center line.

Fig. 3 of the drawing illustrates relationship between directions of the water inflows and of propeller blade rotation. Arrow 5 shows a direction of the water inflows as illustrated by vector (b) shown in Fig. 2. Arrow 6 shows a direction of rotation of the propeller. As clearly understood from Fig. 3, the propeller blades receive the water-inflows having such a direction as shown by arrow 5, on its whole plane, against its rotating direction as shown by arrow 6. The directions of arrows 5 and 6 are completely reverse each other. This reception of the reverse water-inflows gives such an effect as if the rotating speed of propeller shaft 3 were increased. Consequently, the aforementioned relationship can attain increase in propulsive efficiency.

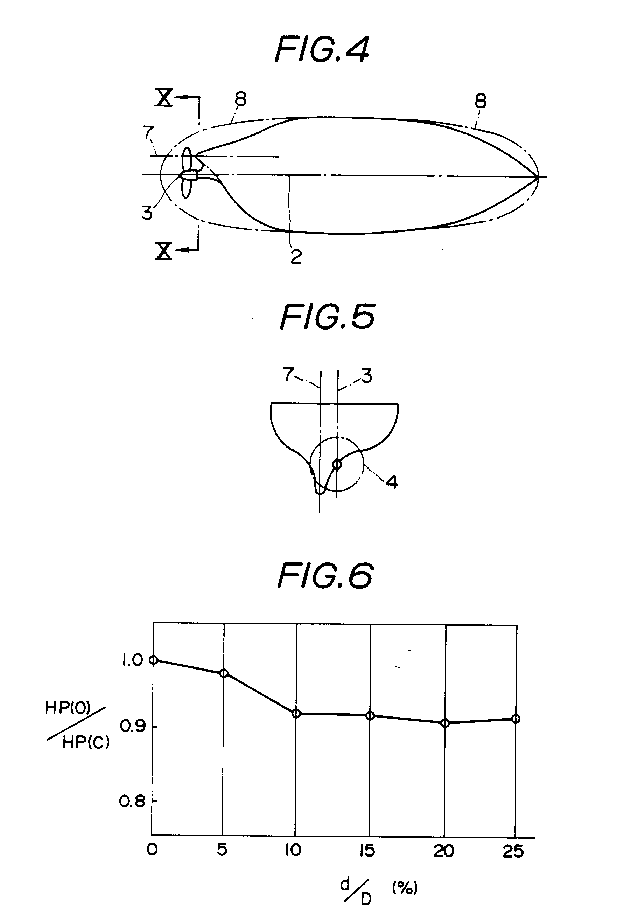

Fig. 4 represents a plane view showing a general construction of an embodiment according to the present invention. Fig. 5 represents a sectional view along with X-X line of Fig. 4. As shown in Figs. 4 and 5, axis 7, passing through the stern end edge, of symmetry in hull section, is positioned eccentrically from the hull center line, and contour line 8 of an upper deck is symmetrical with regard to the hull center line. Consequently, living comfortability and appearance of a vessel of this type is almost same with those of conventional vessels.

In this embodiment, propeller shaft 3 is positioned on hull center line 2, propeller blades are rotated clockwise, and axis 7 of symmetry in hull section passing through the stern end edge is positioned, on the port side, eccentrically from the hull center line. Another embodiment can be given, wherein propeller shaft 3 is positioned on hull center line 2, propeller blades are rotated counterclockwise, and axis 7 is positioned, on the starboard side, eccentricall y from the hull center line. In the case, however, that the propeller blades are rotated clockwise and axis 7 is positioned, on the starboard side, eccentrically from the hull center line, or in the case that the propeller blades are rotated counterclockwise and axis 7 is positioned, on the port side, eccentrically from the hull center line, those positionings are undesirable, since the rotating direction of the propeller blades are rotated to the same direction of water-inflows to the propeller blades, thereby propulsive efficiency being reduced.

Example

Relation of a level distance to propulsive efficiency will now be given, based on the results of water tank test, with reference specifically to Fig. 6 of the drawing. The level distance is a distance between propeller shaft 3 and the stern end edge positioned eccentrically from the hull center line. In Fig. 6, the ordinate indicates a ratio of HP(O)/HP(C), where HP(O) represents propulsive horse powers generated from an engine equipped with a propeller shaft being positioned eccentrically from the hull center line and HP(C) represents propulsive horse powers from an engine of a conventional vessel equipped with a propeller shaft on the hull center line. The absissa indicates a ratio of d/D, where d represents a level distance from the propeller shaft to the stern end edge and D represents a diameter of a propeller disc plane.

As clearly recognized from Fig. 6, the propulsive efficiency is remarkably increased when the d/D ratio ranges 5 to 25%. If the ratio is less than 5%, the propulsive efficiency does not increase. On the other hand, if the ratio is over 25%, the propulsive efficiency does not increase, either. The ratio ranges from 10 to 25% most preferably. In addition to the above, according to other test results, it has been acertained that the rudder position was not required specifically to be restristed and that steering ability was not unfavorably affected.

As described in the above, the present invention, keeping the sectional shape of an afterbody sinking into water to be approximately symmetrical and positioning the same to be slightly eccentrically from the hull center line, effected the following advantages:

(a) Vertical vortices around longitudinal axes, which had been a cause to reduce propulsive efficiency of a large vessel, were enabled to increase the propulsive efficiency by means of making use of water-inflow to the propeller blades which circulate reversely to the rotating direction of the propeller;

(b) The propulsive efficiency was increased more effectively by allowing the propeller disc plane to occupy the other vessel side in space with regard to the hull center line, so as to receive water-inflows along with such a vessel side, circulating reversely to the rotating direction of the disc plane;

(c) The steering ability was almost unaffected by the aforementioned positioning since the stern end edge was positioned eccentrically, only a little, from the hull center line; and

(d) The ship-building cost of a vessel of this hull shape was economical in comparison with that of a vessel of asymmetric shape since this hull shape is almost symmetrical.

## Claims

1. A vessel equipped with a single screw which comprises:
   - a propeller shaft (3) being positioned on the hull longitudinal median plane (2),
   - a upper deck (8) being symmetrical with regard to the longitudinal median plane,
   - a stern (1) having a first axis (7) of symmetry in hull cross-section above the axis of the propeller and a second axis of symmetry in hull cross-section below the axis of the propeller, the two axes of symmetry being positioned eccentrically from the longitudinal median plane,
   - the two axes of symmetry are positioned eccentrically from the hull longitudinal plane by at least 5 % of a diameter of a propeller disc plane, characterized in that
   - the axis of symmetry above the axis of the propeller and the axis of symmetry below the axis of the propeller are situated on the same line and form thus one single axis of symmetry;

   - the single axis of symmetry is positioned eccentrically from the hull longitudinal median plane by 5 to 25 % of a diameter of a propeller disc plane.

2. A vessel according to claim 1, characterized in that said axis (7) of symmetry is positioned eccentrically from the hull longitudial median (2) plan by 10 to 15 % of a diameter of a propeller disc plane (4).

3. A vessel according to claim 1 or 2, characterized in that said axis (7) of symmetry is positioned on the port side when said propeller shaft (3) is rotated clockwise.

4. A vessel according to claim 1 or 2, characterized in that said axis (7) of symmetry is positioned on the starboard side when said propeller shaft (3) is rotated counter-clockwise.

5. A vessel according to any one of claims 1 to 5, characterized in that said axis (7) of symmetry is positioned on a line passing through the stern end edge of the vessel.

## Revendications

1. Navire équipé d'une seule hélice qui comprend :
   - un arbre (3) d'hélice placé sur le plan médian longitudinal de la coque (2),
   - un pont supérieur (8) symétrique par rapport au plan médian longitudinal,
   - une poupe (1) présentant un premier axe (7) de symétrie dans la section transversale de la coque au-dessus de l'axe de l'hélice et un second axe de symétrie dans une section transversale de la coque au-dessous de l'axe de l'hélice, les deux axes de symétrie étant placés de façon excentrique par rapport au plan médian longitudinal,
   - les deux axes de symétrie étant situés de façon excentrique par rapport au plan longitudinal de la coque sur au moins 5 % d'un diamètre du plan du disque de l'hélice, caractérisé en ce que :
   - l'axe de symétrie au-dessus de l'axe de l'hélice et l'axe de symétrie au-dessous de l'axe de l'hélice sont situés sur la même ligne et forment ainsi un seul axe de symétrie;

- le seul axe de symétrie est placé de façon excentrique par rapport au plan médian longitudinal de la coque sur 5 à 25 % d'un diamètre du plan du disque de l'hélice.

2. Navire selon la revendication 1, caractérisé en ce que ledit axe (7) de symétrie est placé de manière excentrique par rapport au plan médian (2) longitudinal de la coque sur 10 à 15 % d'un diamètre du plan (4) du disque de l'hélice.

3. Navire selon la revendication 1 ou 2, caractérisé en ce que ledit axe (7) de symétrie est placé sur le côté babord lorsque ledit arbre (3) de l'hélice tourne dans le sens des aiguilles d'une montre.

4. Navire selon la revendication 1 ou 2, caractérisé en ce que ledit axe (7) de symétrie est placé du côté tribord lorsque ledit arbre (3) de l'hélice tourne dans le sens inverse des aiguilles d'une montre.

5. Navire selon l'une quelconque des revendications 1 à 5, caractérisé en ce que ledit axe (7) de symétrie est placé sur une ligne passant par le bord du navire, du côté de la poupe.

**Patentansprüche**

1. Wasserfahrzeug mit einer einzigen Schraube, umfassend:
   - eine Schraubenwelle (3), die auf der Medianebene (2) in Längsrichtung des Wasserfahrzeugkörpers angeordnet ist,
   - ein Oberdeck (8), das bezogen auf die Medianebene in Längsrichtung symmetrisch ist,
   - ein Heck (1) mit einer ersten Symmetrieachse (7) im Querschnitt des Wasserfahrzeugkörpers oberhalb der Schraubenachse und einer zweiten Symmetrieachse im Querschnitt des Schiffskörpers unterhalb der Schraubenachse, wobei die beiden Symmetrieachsen exzentrisch zu der Medianebene in Längsrichtung angeordnet sind, und wobei
   - die beiden Symmetrieachsen um mindestens 5 % exzentrisch zur Längsebene des Wasserfahrzeugkörpers bezogen auf den Durchmesser der Schraubenkreisfläche angeordnet sind, dadurch **gekennzeichnet,** daß
   - die Symmetrieachse oberhalb der Schraubenachse und die Symmetrieachse unterhalb der Schraubenachse auf der gleichen Geraden angeordnet sind, und somit eine einzige Symmetrieachse bilden;
   - die einzige Symmetrieachse um 5 bis 25 % des Durchmessers der Schraubenkreisfläche exzentrisch zu der Medianebene in Längsrichtung des Wasserfahrzeugkörpers angeordnet ist.

2. Wasserfahrzeug nach Anspruch 1, dadurch **gekennzeichnet,** daß die Symmetrieachse (7) um 10 bis 15 % des Durchmessers der Schraubenkreisfläche (4) exzentrisch zu der Medianebene (2) in Längsrichtung des Wasserfahrzeugkörpers angeordnet ist.

3. Wasserfahrzeug nach Anspruch 1 oder 2, dadurch **gekennzeichnet,** daß die Symmetrieachse (7) auf der Backbord-Seite angeordnet ist, wenn die Schraubenwelle (3) im Uhrzeigersinn gedreht wird.

4. Wasserfahrzeug nach Anspruch 1 oder 2, dadurch **gekennzeichnet,** daß die Symmetrieachse (7) auf der Steuerbord-Seite angeordnet ist, wenn die Schraubenwelle (3) entgegen dem Uhrzeigersinn gedreht wird.

5. Wasserfahrzeug nach einem der Ansprüche 1 bis 5, dadurch **gekennzeichnet,** daß die Symmetrieachse (7) auf einer Geraden angeordnet ist, die durch die heckseitige Endkante des Wasserfahrzeuges verläuft.

**FIG.1**

**FIG.2**

**FIG.3**

# FIG.4

# FIG.5

# FIG.6

7